# EUROPÄISCHE PATENTANMELDUNG

(11) **EP 0 644 329 A1**
(43) Veröffentlichungstag der Anmeldung: **22.03.1995**
(21) Anmeldenummer: 94114129.3
(22) Anmeldetag: 08.09.1994
(51) Int. Cl.: F02M 65/00, G01S 13/88

(54) **Kraftstoff-Einspritzdüse für Brennkraftmaschinen**

(30) Priorität: 18.09.1993 DE 4331771
(71) Anmelder: ADAM OPEL AG, D-65423 Rüsselsheim (DE)
(72) Erfinder: Indra, Friedrich Prof. Dr.-Ing., D-64673 Zwingenberg (DE); Braun, Axel, Dipl.-Ing, D-55120 Mainz (DE); Baican Roman Dr., D-63071 Offenbach (DE); Reitz, Dieter Dipl.-Ing., D-64367 Mühltal (DE); Zima, Peter Dr.Ing., D-55130 Mainz (DE)
(74) Vertreter: Kümpfel, Heinz, Dipl.-Ing.

(57) **Zusammenfassung**

Die Erfindung betrifft eine Kraftstoff-Einspritzdüse für Brennkraftmaschinen mit einem Düsenkörper (3), in welchem ein Ventilsitz gebildet und eine Ventilnadel (5) verschiebbar geführt ist, die von einer Schließfeder (8, 11) und entgegengesetzt dazu vom Kraftstoffdruck beaufschlagt ist und sich beim Öffnungshub entgegen der Strömungsrichtung des Kraftstoffes bewegt, ferner mit einem Düsenhalter (1), an welchem der Düsenkörper (3) befestigt ist und der eine Kammer (12) zur Aufnahme der Schließfeder (8, 11) sowie zur Aufnahme eines Sensors zur Erkennung der Bewegung der Ventilnadel (5) hat.

Ziel der Erfindung ist es, den Sensor bei zumindest gleichbleibender Genauigkeit mit vergleichbaren bekannten Ausführungen kleiner zu bauen und damit die Einspritzdüse insgesamt klein fertigen zu können.

Erfindungsgemäß wird dies dadurch gelöst, daß in die Kammer (12) eine mit der Ventilnadel (5) gekoppelte Sensornadel (16) eintaucht, welche eine Reflexionsfläche (17) trägt, auf die eine mit dem Düsenhalter (1) fest verbundene Antenne (18) ein HF-Signal abstrahlt und das reflektierte von der Antenne (18) empfangene Signal zu einem Steuergerät für die Kraftstoffzufuhr geleitet wird.

Damit gelingt bei minimaler zusätzlicher Bauhöhe der Einspritzdüse eine zumindest gleichwertig genaue Erfassung des Einspritzbeginns wie bei Einspritzdüsen mit erheblich aufwendigeren und größer bauenden Sensoren.

## Beschreibung

Die Erfindung betrifft eine Kraftstoff-Einspritzdüse für Brennkraftmaschinen mit einem Düsenkörper, in welchem ein Ventilsitz gebildet und eine Ventilnadel verschiebbar geführt ist, die von einer Schließfeder und entgegengesetzt dazu vom Kraftstoffdruck beaufschlagt ist und sich beim Öffnungshub entgegen der Strömungsrichtung des Kraftstoffes bewegt, ferner mit einem Düsenhalter, an welchem der Düsenkörper befestigt ist und der eine Kammer zur Aufnahme der Schließfeder sowie zur Aufnahme eines Sensors zur Erkennung der Bewegung der Ventilnadel hat.

Eine solche Kraftstoff-Einspritzdüse ist mit DE-OS 35 15 264 beschrieben. Bei dieser bekannten Kraftstoff-Einspritzdüse ist ein Nadelbewegungsfühler an einer Auswerteschaltung eines Steuergerätes für die Kraftstoffzufuhr anschließbar, um damit den Einspritzbeginn erkennen zu können. Der Nadelbewegungsfühler besteht aus einer Induktionsspule mit Wicklung und Spulenkörper, einem Spulenkern, einem Ankerbolzen, einem durch einen die Schließfeder abstützenden Stützkörper gebildeten magnetischen Rückschluß sowie zwei Leitungsdrähten, die von außen zu der Induktionsspule geführt sind.

Für den Aufbau eines derartigen Nadelbewegungsfühlers sind nicht nur eine Vielzahl von Teilen erforderlich, die in Präzisionsarbeit montiert werden müssen. Ein solcher Nadelbewegungsfühler erfordert auch erheblichen Einbauraum im Düsenhalter, da die Induktionsspule für die Generierung eines brauchbaren Signals eine Mindestgröße aufweisen muß. Dies führt zu einer Vergrößerung der Bauhöhe der Kraftstoff-Einspritzdüse. Der Einbauraum für Kraftstoff-Einspritzdüsen ist in Brennkraftmaschinen jedoch besonders in der Höhe begrenzt.

Der Erfindung liegt somit die Aufgabe zugrunde, eine Kraftstoff-Einspritzdüse gemäß dem Oberbegriff des Patentanspruches 1 zu schaffen, die bei zumindest gleicher Genauigkeit der Anzeige des Nadelbewegungsfühlers gegenüber den bekannten Bauarten eine deutlich geringere Bauhöhe aufweist.

Erfindungsgemäß wird diese Aufgabe dadurch gelöst, daß in die Kammer eine mit der Ventilnadel gekoppelte Sensornadel eintaucht, welche eine Reflexionsfläche trägt, auf die eine mit dem Düsenhalter fest verbundene Antenne ein HF-Signal abstrahlt und das von der Reflexionsfläche reflektierte und von der Antenne empfangene Signal zu einem Steuergerät für die Kraftstoffzufuhr geleitet wird.

Da die Ventilnadel bei Einspritzbeginn die Sensornadel und damit die mit ihr verbundene Reflexionsfläche in Richtung zur Antenne bewegt, verändert sich das dort empfangene Signal. Das Steuergerät kann aus dieser Signaländerung den Einspritzbeginn exakt ermitteln, wobei diese Signaländerung auf einfache Weise digital weiterverarbeitet werden kann. Der dafür in der Einspritzdüse erforderliche Bauraum ist sehr gering, so daß dadurch kaum zusätzliche Bauhöhe erforderlich ist. Solche Einspritzdüsen sind somit auch in Zylinderköpfen von Brennkraftmaschinen einsetzbar, bei denen infolge der Anordnung der Nockenwelle oder anderer Bauteile nur wenig Raum für die Einspritzdüse verbleibt.

Eine besonders vorteilhafte Ausführungsform der Erfindung besteht darin, daß in die Kammer eine mit der Ventilnadel gekoppelte Sensornadel eintaucht, oberhalb der Sensornadel in der Kammer eine Antenne für die Abstrahlung und den Empfang eines HF-Signals angeordnet ist, die Oberkante der Sensornadel eine Reflexionsfläche für das HF-Signal trägt, der Antenne über eine Leitung eine HF-Signal zugeführt ist und das von der Reflexionsfläche reflektierte empfangene Signal zu einem Steuergerät für die Kraftstoffzufuhr zur Auswertung zugeleitet wird.

Diese vorteilhafte Ausführungsform ermöglicht es, die obere Begrenzungsfläche der Sensornadel als Reflektor auszubilden. Damit sind keine zusätzlichen Aufwendungen für die Darstellung eines Reflektors, wie beispielsweise Einfräsen einer Nut in die Sensornadel oder Anbringen besonderer Reflexionsflächen, erforderlich.

Vorteilhafterweise wird das HF-Signal kontinuierlich von der Antenne abgestrahlt, wobei die Änderung der Reflexion infolge einer Annäherung der Reflexionsfläche an die Antenne als Signal für den Einspritzbeginn im Steuergerät ausgewertet wird.

Damit ist es möglich, daß ein für die Generierung des HF-Signals vorgesehener Oszillator ständig in Betrieb bleiben kann und so der Schaltungsaufwand für die Signalzuführung gering bleibt.

Als HF-Signal eignet sich besonders ein Signal im GHz-Bereich, vorzugsweise ein Signal mit einer Frequenz von 4,5 - 5,5 GHz.

Die Signalfrequenz im GHz-Bereich sichert infolge der kurzen Wellenlängen ein sehr genaues Sensoransprechen bei bereits geringen Bewegungen der Sensornadel.

In einer bevorzugten Ausführungsform verbleibt bei offener Einspritzdüse zwischen der Reflexionsfläche und der Antenne ein Abstand.

Es entspricht jedoch auch der Erfindung, wenn der Abstand zwischen Sender und Reflexionsfläche gleich Null wird.

Dabei entspricht eine solche Ausführung keinesfalls einer einfachen Kontaktkontrolle, bei der es auf eine stromleitende Kontaktnahme ankommt. Bei der vorliegenden Erfindung bedarf es keiner Stromübertragung an der Kontaktstelle, da ja auch bei Berührung zwischen Sender und Reflexionsfläche lediglich das reflektierende Signal für eine Auswertung herangezogen wird.

Anstelle einer einzigen Antenne für die Abstrahlung eines HF-Signals und für den Empfang des reflektierten Signals können auch zwei Antennen vorgesehen sein, von denen die eine als Senderantenne und die andere als Empfangsantenne geschaltet sind.

Ein Ausführungsbeispiel der Erfindung ist nachstehend anhand einer Zeichnung näher beschrieben.

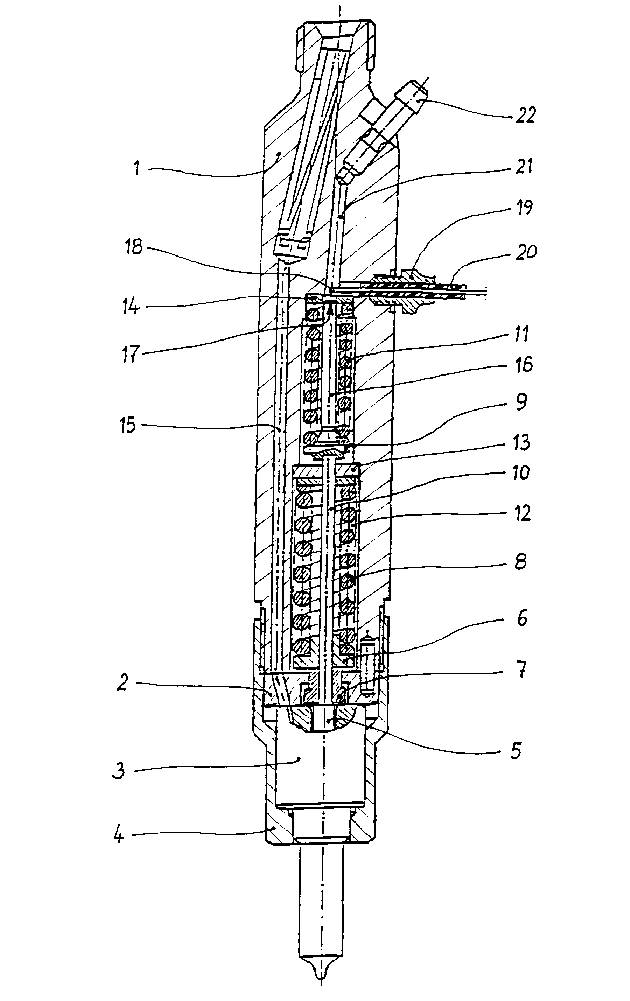

Die Zeichnung zeigt einen Schnitt durch eine erfindungsgemäße Kraftstoff-Einspritzdüse. Die Einspritzdüse hat einen Düsenhalter 1, gegen den eine Zwischenplatte 2 und ein Düsenkörper 3 durch eine Überwurfmutter 4 gespannt sind. Im Düsenkörper 3 ist eine zapfenartige Ventilnadel 5 verschiebbar gelagert. Auf die Ventilnadel 5 wirkt über einen Federteller 6 sowie ein Druckstück 7 die Kraft einer Schließfeder 8 sowie über einen Federteller 9 und einen Druckbolzen 10 die Kraft einer zweiten Schließfeder 11. Die Schließfedern 8 und 11 sind in einer Kammer 12 des Düsenhalters 1 untergebracht. Die Schließfeder 8 stützt sich über eine Stützplatte 13 und die Schließfeder 11 an einer weiteren Stützplatte 14 am Düsenhalter 1 ab.

Die Ventilnadel 5 arbeitet mit einem nach innen gekehrten Ventilsitz im Düsenkörper 3 zusammen. Sie wird durch den über die Kraftstoffdruckleitung 15 zugeführten Kraftstoffdruck entgegen der Kraft der Schließfedern 8 und 11 in Richtung zum Düsenhalter 1 angehoben und gibt damit die Öffnungen der Einspritzdüse frei.

Mit dem Federteller 9 fest verbunden ist eine Sensornadel 16, die sich in Richtung zu der Stützplatte 4 erstreckt und deren Stirnseite als Reflexionsfläche 17 ausgebildet ist. Im oberen Teil der Kammer 12 ist zentral zu der Reflexionsfläche 17 eine Antenne 18 angeordnet, welche von einem Antennenhalter 19, der seitlich in den Düsenhalter 1 eingeschraubt ist, fixiert ist. Durch den Antennenhalter 19 hindurch führt eine als Koaxialkabel ausgebildete Leitung 20, welche der Antenne 18 von einem nicht dargestellten Oszillator ein Dauersignal mit einer Frequenz von 4,5 - 5,5 GHz zuleitet.

Mit 21 ist eine Leckölleitung bezeichnet, die zu einem Leckölstutzen 22 führt.

Bei Betrieb einer solchen Kraftstoff-Einspritzdüse wird von einer Kraftstoff-Einspritzpumpe der Kraftstoff durch die Kraftstoffdruckleitung 15 dem Düsenkörper 3 zugeleitet. Gleichzeitig wird der Antenne 18 ein HF-Signal als Dauersignal zugeführt. Bei Erreichen eines vorbestimmten Druckes des Kraftstoffes wird die Düsennadel 5 von ihrem Sitz abgehoben und der Kraftstoff wird durch die Düsenöffnungen abgespritzt. Mit dem Abheben der Düsennadel 5, also dem Einspritzbeginn, wird gleichzeitig der Druckbolzen 10 sowie die Sensornadel 16 in Richtung zur Antenne 18 hin bewegt, so daß sich die Reflexionsfläche 17 der Antenne 18 um den Betrag des Weges der Düsennadel 5 nähert. Damit ändern sich auch die Reflexionsverhältnisse für das HF-Signal an der Reflexionsfläche 17.

Diese Änderung wird durch veränderten Empfang an der Antenne 18 wahrgenommen und über die Leitung 20 zu einem Steuergerät zugeleitet. Das Steuergerät kann so den Zeitpunkt des Einspritzbeginns sehr genau erkennen und in an sich bekannter Weise entsprechend der eingestellten Laststufe die Einspritzdauer berechnen bzw. den Einspritzbeginn auf den motorisch optimalen Zeitpunkt festlegen. Das damit erhaltene Signal für den Einspritzbeginn läßt sich wie gewünscht in einfacher Weise digital weiterverarbeiten. Der Bauraum für einen so ausgebildeten Sensor ist gering, so daß die Kraftstoff-Einspritzdüse insgesamt kleiner als vergleichbare Düsen ausgeführt werden kann.

Neben der beschriebenen Ausführung der Erfindung sind eine Vielzahl weiterer Ausführungsbeispiele denkbar, indem z. B. am Antennenhalter 19 jeweils eine Senderantenne und eine Empfangsantenne getrennt voneinander angeordnet sind und für jede dieser Antennen eine gesonderte Leitung für die Zu- bzw. Ableitung des Signals vorgesehen ist. Die Reflexionsfläche 17 kann auch als gesondertes mit der ventilnadel 5 in Verbindung stehendes Teil ausgebildet sein.

Es ist möglich, die Reflexionsfläche 17 bei abgehobener Ventilnadel 5 in einem Abstand von der Antenne 18 zu belassen. Dieser Abstand kann jedoch auch bis auf Null reduziert werden.

Die Reflexionsfläche 17 kann, wie im beschriebenen Ausführungsbeispiel dargestellt, durch die Stirnfläche der Sensornadel 16 gebildet sein; sie kann jedoch auch durch die Fläche einer in den Schaft der Sensornadel 16 eingefrästen Nut gebildet werden, wobei sowohl die eine als auch die andere Flanke als Reflektor für das von einer im Bereich der Nut angeordneten Antenne abgestrahlte Signal dienen kann.

Eine derartige erfindungsgemäße Kraftstoff-Einspritzdüse ist insbesondere für Dieselmotoren vorgesehen, aber auch für andere motorische Verbrennungsverfahren geeignet.

## Patentansprüche

1. Kraftstoff-Einspritzdüse für Brennkraftmaschinen mit einem Düsenkörper (3), in welchem ein Ventilsitz gebildet und eine Ventilnadel (5) verschiebbar geführt ist, die von einer Schließfeder (8, 11) und entgegengesetzt dazu vom Kraftstoffdruck beaufschlagt ist und sich beim Öffnungshub entgegen der Strömungsrichtung des Kraftstoffes bewegt, ferner mit einem Düsenhalter (1), an welchem der Düsenkörper (3) befestigt ist und der eine Kammer (12) zur Aufnahme der Schließfeder (8, 11) sowie zur Aufnahme eines Sensors zur Erkennung der Bewegung der Ventilnadel (5) hat, dadurch gekennzeichnet, daß in die Kammer (12) eine mit der Ventilnadel (5) gekoppelte Sensornadel (16) eintaucht, welche eine Reflexionsfläche (17) trägt, auf die eine mit dem Düsenhalter (1) fest verbundene Antenne (18) ein HF-Signal abstrahlt und daß von der Reflexionsfläche (17) reflektierte und von der Antenne (18) empfangene Signal zu einem Steuergerät für die Kraftstoffzufuhr geleitet wird.

2. Kraftstoff-Einspritzdüse nach Anspruch 1, dadurch gekennzeichnet, daß in die Kammer (12) eine mit der Ventilnadel (5) gekoppelte Sensornadel (16) eintaucht, oberhalb der Sensornadel (16) in der Kammer (12) eine Antenne (18) für die Abstrahlung und den Empfang eines HF-Signals angeordnet ist, die Oberkante der Sensornadel (16) eine Reflexionsfläche (17) trägt, der Antenne (18) über eine Leitung (20) ein HF-Signal zugeführt ist und das von der Reflexionsfläche (17) reflektierte und aufgenommene Signal zu einem Steuergerät für die Kraftstoffzufuhr zur Auswertung geleitet wird.

3. Kraftstoff-Einspritzdüse nach Anspruch 1 und 2, dadurch gekennzeichnet, daß das HF-Signal kontinuierlich von der Antenne (18) abgestrahlt wird, wobei die Änderung der Reflexion infolge einer Annäherung der Reflexionsfläche (17) an die Antenne (18) als Signal für den Einspritzbeginn im Steuergerät ausgewertet wird.

4. Kraftstoff-Einspritzdüse nach Anspruch 1 bis 3, dadurch gekennzeichnet, daß als HF-Signal ein Signal im GHz-Bereich verwendet ist.

5. Kraftstoff-Einspritzdüse nach Anspruch 4, dadurch gekennzeichnet, daß das HF-Signal eine Frequenz von 4,5 - 5,5 GHz hat.

6. Kraftstoff-Einspritzdüse nach Anspruch 1 bis 5, dadurch gekennzeichnet, daß bei geöffneter Einspritzdüse zwischen der Reflexionsfläche (17) und der Antenne (18) ein Abstand verbleibt.

7. Kraftstoff-Einspritzdüse nach Anspruch 1 bis 5, dadurch gekennzeichnet, daß bei geöffneter Einspritzdüse zwischen der Reflexionsfläche (17) und der Antenne (18) der Abstand gleich Null ist.

8. Kraftstoff-Einspritzdüse nach 1 bis 7, dadurch gekennzeichnet, daß für die Abstrahlung des HF-Signals und für den Empfang des von der Reflexionsfläche (17) reflektierten Signals eine gemeinsame Antenne (18) vorgesehen ist.

9. Kraftstoff-Einspritzdüse nach Anspruch 1 bis 7, dadurch gekennzeichnet, daß sowohl für die Abstrahlung des HF-Signals als auch für den Empfang des von der Reflexionsfläche (17) reflektierten Signals jeweils eine Antenne vorgesehen ist.
